# EUROPÄISCHE PATENTSCHRIFT

(11) **EP 1 949 190 B1**
(45) Veröffentlichungstag und Bekanntmachung des Hinweises auf die Patenterteilung: **15.12.2010**
(21) Anmeldenummer: 06793987.6
(22) Anmeldetag: 06.10.2006
(51) Int. Cl.: G05B 19/042

(54) **DATENVERARBEITUNGSVORRICHTUNG UND VERFAHREN ZUM BETRIEB**
DATA PROCESSING DEVICE AND METHOD FOR THE OPERATION THEREOF
DISPOSITIF DE TRAITEMENT DE DONNEES ET PROCEDE POUR LE FAIRE FONCTIONNER

(30) Priorität: 07.11.2005 DE 102005052971
(43) Veröffentlichungstag der Anmeldung: 30.07.2008
(73) Patentinhaber: Continental Automotive GmbH, 30165 Hannover (DE)
(72) Erfinder: NÄTHER, Horst, 78052 Villingen-Schwenningen (DE)
(86) Internationale Anmeldenummer: PCT/EP2006/067146
(87) Internationale Veröffentlichungsnummer: WO 2007/051685

(56) Entgegenhaltungen:
- DE-A1- 19 704 855
- US-A1- 2001 037 161
- US-A1- 2002 161 820

## Beschreibung

Die Erfindung betrifft eine Datenverarbeitungsvorrichtung, insbesondere einen Tachographen für ein Kraftfahrzeug, mit Funktionsmodulen, welche bestimmte Funktionen der Datenverarbeitungsvorrichtung oder verbundener Geräte steuern und mit Datenmodulen, welche zur Nutzung der Funktionen die Funktionsmodule ansteuern. Daneben betrifft die Erfindung ein Verfahren zum Betrieb einer Datenverarbeitungsvorrichtung, insbesondere der vorgenannten Art.

Moderne Software mit komplexer Funktionalität ist regelmäßig nach einem Schichtenmodell aufgebaut, beispielsweise dem Open Systems Interconnections Reference Model, um mittels einer hierarchischen Struktur die Darstellung der komplexen Sachverhalte zu vereinfachen und die einzelnen Funktionen verständlicher zu machen. In der mit dem Attribut "oberste" versehenen Schicht befinden sich hierbei meist Module zur Steuerung und Datenauswertung von Daten und in der als "unterste" bezeichneten Schicht sind häufig Treibermodule für verschiedene Schnittstellen bzw. Funktionen oder externe Geräte, wie beispielsweise Drucker oder Sensoren, zu finden. Da die einzelnen Schichten insgesamt eine abgestimmt funktionierende Einheit bilden müssen, ist eine umfangreiche Kommunikation zwischen den Schichten erforderlich. Hierbei kommen die üblichen Kommunikationsmodi zwischen den Programmen der einzelnen Schichten zur Anwendung. Besonders aufwendig und fehlerträchtig.ist hierbei die Kommunikation mit der untersten Schicht bzw. den Treibern der Schnittstellen, da diese beispielsweise zur Ansteuerung externer Geräte eine besondere gerätspezifische Syntax erfordert. Am Beispiel des Tachographen, mit welchem die Erfindung bevorzugt Anwendung findet, zeigt sich insbesondere bei der Kommunikation mit dem Treibermodul des Drehzahlsensors ein hoher Programmieraufwand, da auf diesen eine Vielzahl von Datenmodulen zugreifen können, beispielsweise ein Ereignisauswertemodul, die Ansteuerung einer Anzeigeinheit oder eine Echtzeituhr. Hierbei ist es üblich, dass die mit der untersten Schicht kommunizierenden Module bzw. Programme jeweils eine auf den entsprechenden Treiber abgestimmte Kommunikationssyntax als integralen Bestandteil aufweisen. Ändert sich in Folge einer Anpassung des Gesamtproduktes beispielsweise ein externes Gerät, so ist der Anpassungsaufwand in mehreren Schichten des Schichtenmodels erheblich. Dies schränkt die Flexibilität des Produktes stark ein und führt zu hohen Kosten von Veränderungen die darüber hinaus häufig mit Fehlern in der komplexen Funktion einhergehen. Ein Tachograph, bei dem die Erfindung bevorzugt Anwendung finden kann, ist beispielsweise in der europäischen Patentschrift EP 1 493 129 B1 beschrieben.

Als nächstkommender Stand der Technik ist das Dokument DE 197 04 855 bekannt. Es offenbart eine Datenverarbeitungsanlage mit Funktionsmodulen, Datenmodulen und einem Schnittstellenmodul. Eine Anpassung individueller Kommunikationslösungen von Datenmodulen mit Funktionsmodulen ist hierfür notwendig.

Ausgehend von den beschriebenen Nachteilen des Standes der Technik hat es sich die Erfindung zur Aufgabe gemacht, den Aufwand und die Fehleranfälligkeit von Änderungen an einer Datenverarbeitungsvorrichtung, insbesondere an einem Tachographen, zu reduzieren.

Hierzu wird eine Datenverarbeitungsvorrichtung nach Anspruch 1 und ein Verfahren zum Betrieb einer Datenverarbeitungsvorrichtung nach Anspruch 12 vorgeschlagen. Die Unteransprüche beinhalten vorteilhafte Weiterbildungen der Erfindung, wobei sich die Erfindung auch auf solche Ausführungsformen erstreckt, die nicht nur aufgrund mittels expliziter Rückbezüge gestützter Kombinationen der Ansprüche gegeben sind.

Unter erfindungsgemäßen Funktionsmodulen sind insbesondere die Treibermodule und die damit zusammenwirkenden Bauelemente bzw. Geräte und deren Steuerungen zu verstehen, beispielsweise asynchrone Treiber, synchrone Treiber, Treiber für ein Carrier Network, Treiber für einen Drehzahlmesser bzw. eine Messung eines geschwindigkeitsbezogenen Signals eines Nutzfahrzeuges, Treiber für eine Anzeigeeinheit oder einen Drucker und ähnliche Module. Datenmodule nach der Erfindung, die sich in einer oberen Schicht befinden, sind beispielsweise Module zur Handhabung von Datenträgern oder zum Download oder zur Kalibrierung oder zur Auswertung von Bewegungen oder Ereignissen oder Module zur Ansteuerung von Anzeigeeinheiten oder Druckern oder eine Echtzeituhr.

Ein entscheidender Vorteil einer erfindungsgemäßen Datenverarbeitungsvorrichtung bzw. eines erfindungsgemäßen Verfahrens ist in der Schaffung eines zentralen Moduls, dem Kommunikationsmodul zu sehen, welches mittels der standardisierten Schnittstelle bzw. dem Standardschnittstellenmodul die Verbindung zwischen Datenmodulen und Funktionsmodulen herstellt und den Zugriff auch auf mehrfach genutzte Treiber koordiniert und verwaltet. Diese Ausführung vermeidet den kostenintensiven und fehlerträchtigen Aufwand der Anpassung individueller Kommunikationslösungen von Datenmodulen mit Funktionsmodulen und macht auf diese Weise das System nicht nur einfacher Verständlich sondern auch besser testbar. Auch Änderungen grundlegender Konzepte können auf diese Weise vereinfacht durchgeführt werden.

Eine sinnvolle Anwendung der Erfindung ergibt sich, wenn die Funktionsmodule jeweils mindestens ein Treibermodul umfassen, mittels welcher die Funktionsmodule, beispielsweise externe Geräte, angesteuert werden. Auf diese Weise können ggf. auch mit den Funktionsmodulen verschiedener Hersteller mitgelieferte Treibermodule mit geringem Arbeitsaufwand eingesetzt werden.

Eine besonders Speicherplatz sparende Lösung ergibt sich, wenn der dem Datenmodul zum Schreiben mitgeteilte Speicherpufferadressenbereich und der dem Funktionsmodul zum Lesen mitgeteilte Speicherpufferadressenbereich identisch sind. Diese Lösung bietet sich vor allem dann an, wenn die von dem Datenmodul an das Funktionsmodul zu übermittelnden Daten im Wesentlichen ungeändert weitergeleitet werden sollen. Sind hingegen umfassende Änderungen der Daten erforderlich, ist es zweckmäßig, wenn die beiden Speicherpufferadressenbereiche unterschiedlich sind. Dies kann beispielsweise bei einem Versehen mit einem Kommunikationsprotokoll der Fall sein.

Die Kommunikation wird von dem erfindungsgemäßen Kommunikationsmodul mit Vorteil zusätzlich unterstützt, wenn das Treibermodul oder das Funktionsmodul mindestens einen Speicherpufferadressenbereich aufweisen, in welchen an das Treibermodul zu übergebende Daten eingetragen werden.

Zweckmäßig besitzen das Kommunikationsmodul und auch die Funktionsmodule bzw. Treibermodule jeweils Speicherpufferadressenbereiche für Ausgangsdaten und Eingangsdaten sowie für Statusinformationen und Einstellparameter. Diese Adressen müssen zu Beginn eines Zugriffs untereinander ausgetauscht werden. Für diesen Austausch ist erfindungsgemäß das Kommunikationsmodul zuständig, welches in einer Initialisierungsphase der Kommunikation diesen Austausch durchführt oder steuert und koordiniert.

Umfassende Flexibilität ergibt sich, wenn das Kommunikationsmodul dem Datenmodul Speicherpufferadressenbereiche des Schnittstellenmoduls mitteilt, bevorzugt einen ersten Speicherpufferadressenbereich zum Schreiben und einen zweiten Speicherpufferadressenbereich zum Lesen. Zusätzlich kann es sinnvoll sein, wenn das Kommunikationsmodul dem Funktionsmodul Speicherpufferadressenbereiche des Schnittstellenmoduls mitteilt, nämlich einen dritten Speicherpufferadressenbereich zum Schreiben und einen vierten Speicherpufferadressenbereich zum Lesen.

Zur Verwaltung des Zugriffs auf mehrfach genutzte Funktionsmodule bzw. deren Treibermodule ist es sinnvoll, wenn das Kommunikationsmodul darüber hinaus auf die Anforderung eines Datenmoduls nach dem Zugriff auf ein Funktionsmodul zunächst beim angeforderten Funktionsmodul die Verfügbarkeit für den angeforderten Zugriff anfragt.

Um Konflikte beim Zugriff funktionsgerecht zu klären, ist es sinnvoll, wenn den Datenmodulen in Bezug auf den Zugriff auf Funktionsmodule Prioritäten zugeordnet sind, nach denen die Abarbeitung der Anforderungen der Funktionsmodule gesteuert von dem Kommunikationsmodul erfolgt. Ist ein Funktionsmodul beispielsweise besetzt, und hat der Kommunikationskanal bzw. das anfragende Datenmodul eine höhere Priorität als das das Funktionsmodul besetzende, so kann an das benutzende Datenmodul bzw. den benutzenden Kanal ein "Release Call" ergehen, worauf das benutzende Datenmodul die Kommunikation abschließt und das Funktionsmodul bzw. das entsprechende Treibermodul freigibt. Ist ein sofortiger Zugriff notwendig, kann das Standardschnittstellenmodul die Kommunikation sofort umschalten. Dem Datenmodul, dessen Kommunikation abgebrochen worden ist, kann dies mittels einer "Abort Message" mitgeteilt werden. Erfindungsgemäß ist es sinnvoll, wenn das Kommunikationsmodul das Zusammenwirken von Datenmodulen, Standardschnittstellenmodul und Funktionsmodulen steuert, insbesondere den Beginn des Auslesens von Daten aus einem Speicherpufferadressenbereich mit dem Ende des Einschreibens von Daten in einen, insbesondere in den auszulesenden Speicherpufferadressenbereich abstimmt.

Eine besonders zweckmäßige weiterbildung des erfindungsgemäßen Verfahrens ist im Folgenden schrittweise beschrieben. In einem ersten Schritt fordert das Datenmodul von dem Kommunikationsmodul einen ersten Speicherpufferadressenbereich des Standardschnittstellenmoduls für ein Funktionsmodul an. Anschließend in einem zweiten Schritt fordert das Kommunikationsmodul von dem Funktionsmodul bzw. dem Treibermodul einen fünften Speicherpufferadressenbereich des Standardschnittstellenmoduls für das Funktionsmodul an. Das Kommunikationsmodul gibt in einem dritten Schritt den fünften Speicherpufferadressenbereich an das Standardschnittstellenmodul weiter. In einem vierten Schritt erfolgt eine Mitteilung des ersten Speicherpufferadressenbereiches von dem

Standardschnittstellenmodul an das Kommunikationsmodul. Danach gibt das Kommunikationsmodul in einem fünften Schritt den ersten Speicherpufferadressenbereich des Standardschnittstellenmoduls an das Datenmodul weiter. Nach dieser Abstimmung der Kommunikation durch das Kommunikationsmodul schreibt in einem sechsten Schritt das Datenmodul Daten in den ersten Speicherpufferadressenbereich des Standardschnittstellenmoduls. Diese Daten werden in einem siebten Schritt von dem Standardschnittstellenmodul mit einem Kommunikationsprotokoll versehen, so dass in einem achten Schritt die Daten in einen Speicherpufferadressenbereich des Treibermoduls kopiert werden können. Das Treibermodul übergibt die entsprechend angepassten Daten an die angeforderte Funktion, beispielsweise erfolgt ein Ausdruck auf Basis dieser Daten.

Im Folgenden ist die Erfindung anhand eines Ausführungsbeispiels unter Bezugnahme auf Zeichnungen ohne Einschränkung der Erfindung auf spezielle Formen des Ausführungsbeispiels zur Verdeutlichung näher beschrieben. Es zeigen:
- Figur 1: eine Schematische Darstellung der Zuordnung von Datenmodulen und Funktionsmodulen sowie des Zusammenwirkens mit dem erfindungsgemäßen Kommunikationsmodul und dem Standardschnittstellenmodul,
- Figur 2: der grundsätzliche Ablauf des Zusammenwirkens des Kommunikationsmoduls, des Standardschnittstellenmoduls, eines Datenmoduls und eines Funktionsmoduls bzw. Treibermoduls,

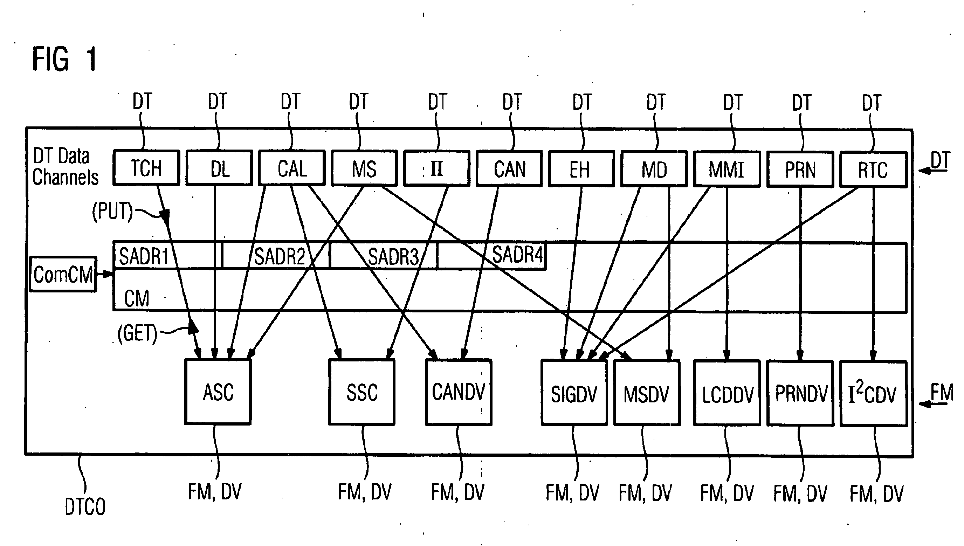

In Figur 1 ist das Zusammenwirken eines Kommunikationsmoduls ComCM, eines Standardschnittstellenmoduls CM mehrerer Datenmodule DT und mehrer Funktionsmodule FM bzw. Treibermodule DV dargestellt. Bei der Kommunikation mit den Funktionsmodulen FM bedienen sich die Datenmodule DT den von dem Kommunikationsmodul ComCM bereitgestellten Diensten in der Art, dass das. Kommunikationsmodul ComCM ein Standardschnittstellenmodul CM konfiguriert und entsprechende Speicherpufferadressenbereiche SADR1 bis SADR5 den Teilnehmern der Kommunikation zur Verfügung stellt bzw. mitteilt. Das Kommunikationsmodul ComCM koordiniert und steuert die Kommunikation zwischen den Datenmodulen DT und den Funktionsmodulen FM bzw. den zu den Funktionsmodulen FM zugehörigen Treibermodulen DV insbesondere durch die Bereitstellung von Speicherpufferadressbereichen, hierbei im Einzelnen für Ausgangsdaten (Put), Eingangsdaten (Get), Statusinformationen und Einstellparameter. In einer Initialisierungsphase vor jeder Kommunikation teilt das Kommunikationsmodul ComCM den Teilnehmern Grundeinstellungen mit.

Bei den Datenmodulen handelt es sich im Einzelnen um ein Datenkartenmodul TCH, welches die Handhabung einer eingegebenen Datenkarte regelt,
ein Downloadmodul DL, welches Downloadvorgänge steuert,
ein Kalibriermodul CAL, welches die Kalibrierung von Messvorgängen steuert,
ein Messungsmodul MS, welches eine Messung mittels eines Bewegungssensors steuert,
ein Informationsmodul II welches ein Informationsinterface ansteuert,
ein Netzmodul CANM, welches den Signalaustausch mit einem Car Area Network CAN regelt,
ein Auswertemodul EH welches die Auswertung von Ereignissen übernimmt,
ein Bewegungsmodul MD, welches Bewegungsdaten auswertet,
ein Anzeigemodul MMI welches eine Anzeigeeinheit ansteuert,
ein Druckmodul PRN welches die Ansteuerung eines Druckers übernimmt und
eine Echtzeituhr RTC.

Die Funktionsmodule bzw. die dazugehörigen Treibermodule umfassen im Einzelnen asynchrone Treiber ASC, synchrone Treiber SSC, Treiber für das Car Area Network CAN, Treiber für einen Drehzahlgeber SIGDV, einen Treiber für ein Bewegungssignal MSDV, einen Treiber für eine Anzeigeeinheit LCDDV, einen Treiber für einen Drucker PRNDV und einen Treiber für ein Bussystem I2CDV. Die in der schematischen Darstellung des Tachographen DTCO angegebenen Pfeile ausgehend von den Datenmodulen DT zu den Funktionsmodulen FM bzw. Treibermodulen DV symbolisieren jeweils eine Kommunikation, wobei diese nicht nur unidirektional sondern auch bidirektional erfolgen kann.

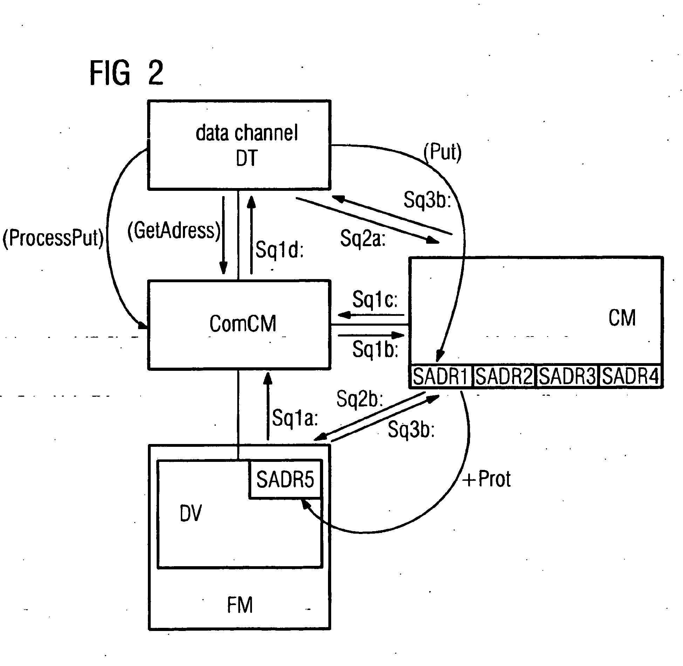

Die Figur 2 zeigt eine vereinfachte schematische Darstellung des Zusammenwirkens eines einzelnen Datenmoduls DT in der Kommunikation mit einem Treibermodul DV bzw. Funktionsmodul FM unterstützt von dem Kommunikationsmodul ComCM und dem Standardschnittstellenmodul CM. In der Folge sind Bezugnahmen auf Prozesse der Darstellung in Klammern (...) gesetzt.

In dem dargestellten Zusammenwirken fordert das Datenmodul DT von dem Kommunikationsmodul ComCM einen ersten Speicherpufferadressenbereich SADR1 des Standardschnittstellenmoduls CM für das Funktionsmodul FM bzw. das Treibermodul DV an (GetAdress). Daraufhin fordert das Kommunikationsmodul ComCM einen fünften Speicherpufferadressenbereich SADR5 von dem Treibermodul DV an (Sq1a). Der übergebene fünfte Speicherpufferadressenbereich SADR5 wird von dem Kommunikationsmodul ComCM an das Standardschnittstellenmodul CM weitergegeben (Sq1b), woraufhin das Standardschnittstellenmodul CM den ersten Speicherpufferadressbereich SADR1 für das Datenmodul DT an das Kommunikationsmodul ComCM zurückgibt (Sq1c). In einem darauf folgenden Schritt (Sqld) gibt das Kommunikationsmodul ComCM den ersten Speicherpufferadressenbereich SADR1 des Standardschnittstellenmoduls CM an das Datenmodul DT weiter.

Auf Basis der ausgetauschten Speicherpufferadressenbereiche SADR1, SADR5 legt das Datenmodul DT Daten im ersten Speicherpufferadressenbereich SADR1 ab (Put) und veranlasst das Kommunikationsmodul ComCM dazu, das Standardschnittstellenmodul CM aufzurufen (ProcessPut, Sq2a). Das aufgerufene-Standardschnittstellenmodul CM fügt den Daten ein Kommunikationsprotokoll PROT hinzu und kopiert die ergänzten Daten in den fünften Speicherpufferadressenbereich SADR5. Gleichzeitig fragt das Kommunikationsmodul ComCM den Status dieser Vorgänge ab (PutFin).

Ermittelt das Kommunikationsmodul ComCM das Ende der Vorgänge ruft es das Treibermodul DV auf, so dass dieses diese Daten zur weiteren Verwendung, beispielsweise durch einen Drucker (im Fall von PRNDV), versendet (Sq2b).

Anschließend fordert das Datenmodul DT das Lesen empfangener Daten von dem Kommunikationsmodul ComCM an, welches diese Anforderung an das Treibermodul DT weitergibt, woraufhin das Treibermodul DT die angeforderten Daten in einen vierten Speicherpufferadressenbereich SADR4 des Standardschnittstellenmoduls CM kopiert (Sq3a). Nach Beendigung der Datenübermittlung von dem Treibermodul DV an das Standardschnittstellenmodul CM bzw. den vierten Speicherpufferadressenbereich SADR4 gibt das Kommunikationsmodul ComCM an das Standardschnittstellenmodul CM die Anweisung, von den übermittelten Daten das Kommunikationsprotokoll PROT zu entfernen. Nach Abschluss dieser Aufbereitung der Daten gibt das den Status der Kommunikationsprozesse überwachende Kommunikationsmodul ComCM an das Datenmodul DT die Meldung, dass die angeforderten Daten aus dem zweiten Speicherpufferadressbereich SADR2 ausgelesen werden können.

## Patentansprüche

1. Datenverarbeitungsvorrichtung (1), insbesondere Tachograph (DTCO) für ein Kraftfahrzeug,
mit Funktionsmodulen (FM), welche bestimmte Funktionen der Datenverarbeitungsvorrichtung (1) oder verbundener Geräte steuern und
mit Datenmodulen (DT), welche zur Nutzung der Funktionen die Funktionsmodule ansteuern,
**dadurch gekennzeichnet,**
**dass** ein Kommunikationsmodul (ComCM) vorgesehen ist, welches mit mindestens einem
Standardschnittstellenmodul (CM) zusammenwirkt, welches Standardschnittstellenmodul (CM) Speicherpufferadressenber eiche (SADR 1 - SADR 5) umfasst, wobei das Kommunikationsmodul (ComCM) so ausgeführt ist, daß es einem ersten Datenmodul (DT) zwecks Ansteuerung eines ersten Funktionsmoduls (FM) mindestens einen Speicherpufferadressenbereich (SADR 1), mitteilt.

2. Datenverarbeitungsvorrichtung (1) nach Anspruch 1,
**dadurch gekennzeichnet,**
**dass** das Kommunikationsmodul (ComCM) dem erstem Funktionsmodul (FM) einen
Speicherpufferadressenbereich (SADR 1 - SADR 5) mitteilt.

3. Datenverarbeitungsvorrichtung (1) nach Anspruch 1,
**dadurch gekennzeichnet,**
**dass** die Funktionsmodule (FM) jeweils mindestens ein Treibermodul (DV) umfassen, mittels welcher die Funktionsmodule (FM) angesteuert werden.

4. Datenverarbeitungsvorrichtung (1) nach Anspruch 1, 2 oder 3,
**dadurch gekennzeichnet,**
**dass** der dem Datenmodul (DT) mitgeteilte Speicherpufferadressenbereich (SADR 1 - SADR 5) und der dem Funktionsmodul (FM) mitgeteilte Speicherpufferadressenbereich (SADR 1 - SADR 5) identisch sind.

5. Datenverarbeitungsvorrichtung (1) nach Anspruch 1, 2, 3 oder 4, **dadurch gekennzeichnet,**
**dass** der dem Datenmodul (DT) mitgeteilte Speicherpufferadressenbereich (SADR 1 - SADR 5) und der dem Funktionsmodul (FM) mitgeteilte Speicherpufferadressenbereich (SADR 1 - SADR 5) unterschiedlich sind.

6. Datenverarbeitungsvorrichtung (1) nach Anspruch 1, 2, 3 oder 4,
**dadurch gekennzeichnet,**
**dass** das Treibermodul (DV) oder das Funktionsmodul (FM) mindestens einen Speicherpufferadressenbereich (SADR 1 - SADR 5) aufweist, in welchen an das Treibermodul (DV) zu übergebende Daten eingetragen werden.

7. Datenverarbeitungsvorrichtung (1) nach einem der vorhergehenden Ansprüche,
**dadurch gekennzeichnet,**
**dass** das Kommunikationsmodul (ComCM) dem Datenmodul (DT) Speicherpufferadressenbereiche (SADR 1 - SADR 5) des Standardschnittstellenmoduls (CM) mitteilt, nämlich einen ersten Speicherpufferadressenbereich (SADR 1) zum Schreiben und einen zweiten Speicherpufferadressenbereich (SADR 2) zum Lesen und dass das Kommunikationsmodul (ComCM) dem Funktionsmodul (FM) Speicherpufferadressenbereiche (SADR 1 - SADR 5) des Standardschnittstellenmoduls (CM) mitteilt, nämlich einen dritten Speicherpufferadressenbereich (SADR 3) zum Schreiben und einen vierten Speicherpufferadressenbereich (SADR 4) zum Lesen.

8. Datenverarbeitungsvorrichtung (1) nach einem vorhergehenden Anspruch,
**dadurch gekennzeichnet,**
**dass** das Kommunikationsmodul (ComCM) auf die Anforderung eines Datenmoduls (DT) nach dem Zugriff auf ein Funktionsmodul (FM) zunächst beim angeforderten Funktionsmodul (FM) die Verfügbarkeit für den angeforderten Zugriff anfragt.

9. Datenverarbeitungsvorrichtung (1) nach einem vorhergehenden Anspruch,
**dadurch gekennzeichnet,**
**dass** den Datenmodulen (DT) in Bezug auf den Zugriff auf Funktionsmodule (FM) Prioritäten zugeordnet sind, nach denen die Abarbeitung der Anforderungen der Funktionsmodule (FM) gesteuert von dem Kommunikationsmodul (ComCM) erfolgt.

10. Datenverarbeitungsvorrichtung (1) nach einem vorhergehenden Anspruch,
**dadurch gekennzeichnet,**
**dass** das Standardschnittstellenmodul (CM) die Daten des Speicherpufferadressenbereich (SADR 1) eines Datenmoduls zum Schreiben versehen mit einem Kommunikationsprotokoll in den Speicherpufferadressenbereich (SADR 1) eines Funktionsmoduls zum Lesen überträgt.

11. Datenverarbeitungsvorrichtung (1) nach einem vorhergehenden Anspruch,
**dadurch gekennzeichnet,**
**dass** das Kommunikationsmodul (ComCM) das Zusammenwirken von Datenmodulen (DT),
Standardschnittstellenmodul (CM)und Funktionsmodulen (FM) steuert, insbesondere den Beginn eines Auslesens von Daten aus einem Speicherpufferadressenbereich (SADR 1 - SADR 5) mit dem Ende des Einschreibens von Daten in einen Speicherpufferadressenbereich (SADR 1) abstimmt.

12. Verfahren zum Betrieb einer
Datenverarbeitungsvorrichtung (1), insbesondere einer Datenverarbeitungsvorrichtung (1) nach einem der vorhergehenden Ansprüche,
**dadurch gekennzeichnet,**
**dass** ein Kommunikationsmodul (ComCM) vorgesehen ist, welches mit mindestens einem Standardschnittstellenmodul (CM), welches - Standardschnittstellenmodul (CM) Speicherpufferadressenbereiche (SADR 1 - SADR 5) umfasst, derartig zusammenwirkt, dass ein erstes Datenmodul (DT) zwecks Ansteuerung eines ersten Funktionsmoduls (FM) eine Anforderung an das Kommunikationsmodul (ComCM) sendet und das Kommunikationsmodul (ComCM) dem ersten Datenmodul (DT) mindestens einen Speicherpufferadressenbereich (SADR 1 - SADR 5) mitteilt.

13. Verfahren nach Anspruch 12,
**dadurch gekennzeichnet,**
**dass** die Funktionsmodule (FM) Treibermodule (DV) umfassen, mittels welcher die Funktionsmodule (FM) angesteuert werden.

14. Verfahren nach einem der Ansprüche 12 - 13,
**dadurch gekennzeichnet,**
**dass** das Kommunikationsmodul (ComCM) dem ersten Funktionsmodul (FM) einen Speicherpufferadressenbereich (SADR 1 - SADR 5) des Standardschnittstellenmoduls (CM) mitteilt.

15. Verfahren nach Anspruch 14,
**dadurch gekennzeichnet,**
**dass** der dem Datenmodul (DT) zum Schreiben mitgeteilte Speicherpufferadressenbereich (SADR 1) und der dem Funktionsmodul (FM) zum Lesen mitgeteilte Speicherpufferadressenbereich (SADR 1) identisch sind.

16. Verfahren nach Anspruch 14,
**dadurch gekennzeichnet,**
**dass** der dem Datenmodul (DT) zum Schreiben mitgeteilte Speicherpufferadressenbereich (SADR 1) und der dem Funktionsmodul (FM) zum Lesen mitgeteilte Speicherpufferadressenbereich (SADR 1) unterschiedlichsind.

17. Verfahren nach einem der Ansprüche 12 - 16,
**dadurch gekennzeichnet,**
**dass**,
**dadurch gekennzeichnet,**
**dass** das Kommunikationsmodul (ComCM) dem Datenmodul (DT). Speicherpufferadressenbereiche (SADR 1 - SADR 5) des Standardschnittstellenmoduls (CM) mitteilt, nämlich einen ersten Speicherpufferadressenbereich (SADR 1) zum Schreiben und einen zweiten Speicherpufferadressenbereich (SADR 1) zum Lesen und dass das Kommunikationsmodul (ComCM) dem Funktionsmodul (FM) Speicherpufferadressenbereiche (SADR 1 - SADR 5) des Standardschnittstellenmoduls (CM) mitteilt, nämlich einen dritten Speicherpufferadressenbereich (SADR 1) zum Schreiben und einen vierten Speicherpufferadressenbereich (SADR 1) zum Lesen.

18. Verfahren nach einem der Ansprüche 12 - 17,
**dadurch gekennzeichnet,**
**dass** das Kommunikationsmodul (ComCM) auf die Anforderung eines Datenmoduls zunächst beim angeforderten Funktionsmodul (FM) die Verfügbarkeit für den angeforderten Zugriff anfragt.

19. Verfahren nach einem der Ansprüche 12 - 18,
**dadurch gekennzeichnet,**
**dass** den Datenmodulen (DT) in Bezug auf den Zugriff auf Funktionsmodule (FM) Prioritäten zugeordnet sind, nach denen die Abarbeitung der Anforderungen von den Funktionsmodulen (FM) gesteuert von dem Kommunikationsmodul (ComCM) erfolgt.

20. Verfahren nach einem der Ansprüche 12 - 19,
**dadurch gekennzeichnet,**
**dass** das Standardschnittstellenmodul (CM) die Daten des Speicherpufferadressenbereichs (SADR1 - SADR 5) des Funktionsmoduls (FM) zum Schreiben versehen mit einem Kommunikationsprotokoll (Prot) in den Speicherpufferadressenbereich (SADR 1) des Funktionsmoduls (FM) zum Lesen überträgt.

21. Verfahren nach einem der Ansprüche 12 - 20,
**dadurch gekennzeichnet,**
**dass** das Kommunikationsmodul (ComCM) das Zusammenwirken von Datenmodulen (DT),
Standardschnittstellenmodul (CM)und Funktionsmodulen (FM) steuert, insbesondere den Beginn eines Auslesens von Daten aus einem Speicherpufferadressenbereich (SADR 1) mit dem Ende des Einschreibens von Daten in einen Speicherpufferadressenbereich (SADR 1) abstimmt.

22. Verfahren nach einem der Ansprüche 12 - 21,
**dadurch gekennzeichnet, dass**
- in einem ersten Schritt das Datenmodul (DT) von dem Kommunikationsmodul (ComCM) einen ersten Speicherpufferadressenbereich (SADR 1) des Standardschnittstellenmoduls (CM) für ein Funktionsmodul (FM) anfordert,
- in einem zweiten Schritt das Kommunikationsmodul- (ComCM) von dem Funktionsmodul (FM) oder dem Treibermodul (DV) einen fünften Speicherpufferadressenbereich (SADR 5) des Standardschnittstellenmoduls (CM) für das Funktionsmodul (FM) anfordert,
- in einem dritten Schritt das Kommunikationsmodul (ComCM) den fünften Speicherpufferadressenbereich (SADR 5) an das Standardschnittstellenmodul (CM) weitergibt,
- in einem vierten Schritt das Standardschnittstellenmodul (CM) dem Kommunikationsmodul (ComCM) einen ersten Speicherpufferadressenbereich (SADR 1) für das Datenmodul (DT) miteilt,
- in einem fünften Schritt das Kommunikationsmodul (ComCM) den ersten Speicherpufferadressenbereich (SADR 1) des Standardschnittstellenmoduls (CM) an das Datenmodul (DT) weitergibt,
- in einem sechsten Schritt das Datenmodul (DT) Daten in den ersten Speicherpufferadressenbereich (SADR 1) des Standardschnittstellenmodul (CM)schreibt,
- in einem siebten Schritt das Standardschnittstellenmodul (CM) die Daten aus dem ersten Speicherpufferadressenbereich (SADR 1) mit einem Kommunikationsprotokoll (Prot) versieht und
- in einem achten Schritt die Daten in einen Speicherpufferadressenbereich (SADR 1) des Treibermoduls (DV) kopiert.

## Claims

1. Data processing device (1), in particular tachograph (DTCO) for a motor vehicle,
having function modules (FM) which control specific functions of the data processing device (1) or connected apparatuses, and having data modules (DT) which actuate the function modules in order to utilize the functions,
**characterized in that** a communication module (ComCM) is provided which interacts with at least one standard interface module (CM) which comprises buffer address areas (SADR 1 - SADR 5), wherein the communication module (ComCM) is embodied in such a way that communicates at least one buffer address area (SADR 1) to a first data module (DT) in order to actuate a first function module (FM).

2. Data processing device (1) according to Claim 1, **characterized in that** the communication module (ComCM) communicates a buffer address area (SADR 1 - SADR 5) to the first function module (FM).

3. Data processing device (1) according to Claim 1, **characterized in that** the function modules (FM) each comprise at least one driver module (DV) by means of which the function modules (FM) are actuated.

4. Data processing device (1) according to Claim 1, 2 or 3, **characterized in that** the buffer address area (SADR 1 - SADR 5) which is communicated to the data module (DT) and the buffer address area (SADR 1 - SADR 5) which is communicated to the function module (FM) are identical.

5. Data processing device (1) according to Claim 1, 2, 3 or 4, **characterized in that** the buffer address area (SADR 1 - SADR 5) which is communicated to the data module (DT) and the buffer address area (SADR 1 - SADR 5) which is communicated to the function module (FM) are different.

6. Data processing device (1) according to Claim 1, 2, 3 or 4, **characterized in that** the driver module (DV) or the function module (FM) has at least one buffer address area (SADR 1 - SADR 5) into which data which is to be transmitted to the driver module (DV) is input.

7. Data processing device (1) according to one of the preceding claims, **characterized in that** the communication module (ComCM) communicates to the data module (DT) buffer address areas (SADR 1 - SADR 5) of the standard interface module (CM), specifically a first buffer address area (SADR 1) for writing and a second buffer address area (SADR 2) for reading, and **in that** the communication module (ComCM) communicates, to the function module (FM), buffer address areas (SADR 1 - SADR 5) of the standard interface module (CM), specifically a third buffer address area (SADR 3) for writing and a fourth buffer address area (SADR 4) for reading.

8. Data processing device (1) according to a preceding claim, **characterized in that**, in response to the request by a data module (DT) for access to a function module (FM), the communication module (ComCM) firstly interrogates the requested function module (FM) with respect to the availability for the requested access.

9. Data processing device (1) according to a preceding claim, **characterized in that** the data modules (DT) are assigned priorities with respect to the access to function modules (FM), according to which priorities the requests by the function modules (FM) are processed under the control of the communication module (ComCM).

10. Data processing device (1) according to a preceding claim, **characterized in that** the standard interface module (CM) transmits the data of the buffer address area (SADR 1) of a data module for writing provided with a communication protocol into the buffer address area (SADR 1) of a function module for reading.

11. Data processing device (1) according to a preceding claim, **characterized in that** the communication module (ComCM) controls the interaction of data modules (DT), standard interface module (CM) and function modules (FM), in particular coordinates the start of reading out of data from a buffer address area (SADR 1 - SADR 5) with the end of the writing of data into a buffer address area (SADR 1).

12. Method for operating a data processing device (1), in particular a data processing device (1) according to one of the preceding claims, **characterized in that** a communication module (ComCM) is provided which interacts with at least one standard interface module (CM) which comprises buffer address areas (SADR 1 - SADR 5), in such a way that, in order to actuate a first function module (FM), a first data module (DT) sends a request to the communication module (ComCM), and the communication module (ComCM) communicates at least one buffer address area (SADR 1 - SADR 5) to the first data module (DT).

13. Method according to Claim 12, **characterized in that** the function modules (FM) comprise driver modules (DV) by means of which the function modules (FM) are actuated.

14. Method according to one of Claims 12-13, **characterized in that** the communication module (ComCM) communicates a buffer address area (SADR 1 - SADR 5) of the standard interface module (CM) to the first function module (FM).

15. Method according to Claim 14, **characterized in that** the buffer address area (SADR 1) which is communicated to the data module (DT) for writing and the buffer address area (SADR 1) which is communicated to the function module (FM) for reading are identical.

16. Method according to Claim 14, **characterized in that** the buffer address area (SADR 1) which is communicated to the data module (DT) for writing and the buffer address area (SADR 1) which is communicated to the function module (FM) for reading are different.

17. Method according to one of Claims 12-16, **characterized in that** the communication module (ComCM) communicates to the data module (DT) buffer address areas (SADR 1 - SADR 5) of the standard interface module (CM), specifically a first buffer address area (SADR 1) for writing and a second buffer address area (SADR 1) for reading, and **in that** the communication module (ComCM) communicates, to the function module (FM), buffer address areas (SADR 1 - SADR 5) of the standard interface module (CM), specifically a third buffer address area (SADR 1) for writing and a fourth buffer address area (SADR 1) for reading.

18. Method according to one of Claims 12-17, **characterized in that**, in response to the request by a data module, the communication module (ComCM) firstly interrogates the requested function module (FM) with respect to the availability for the requested access.

19. Method according to one of Claims 12-18, **characterized in that** the data modules (DT) are assigned priorities with respect to the access to function modules (FM), according to which priorities the requests by the function modules (FM) are processed under the control of the communication module (ComCM).

20. Method according to one of Claims 12-19, **characterized in that** the standard interface module (CM) transmits the data of the buffer address area (SADR 1 - SADR 5) of the function module (FM) for writing provided with a communication protocol (Prot) into the buffer address area (SADR 1) of the function module (FM) for reading.

21. Method according to one of Claims 12-20, **characterized in that** the communication module (ComCM) controls the interaction of data modules (DT), standard interface module (CM) and function modules (FM), in particular coordinates the start of reading out of data from a buffer address area (SADR 1) with the end of the writing of data into a buffer address area (SADR 1) .

22. Method according to one of Claims 12-21, **characterized in that**
- in a first step the data module (DT) requests a first buffer address area (SADR 1) of the standard interface module (CM) for a function module (FM) from the communication module (ComCM),
- in a second step the communication module (ComCM) requests a fifth buffer address area (SADR 5) of the standard interface module (CM) for the function module (FM) from the function module (FM) or the driver module (DV),
- in a third step the communication module (ComCM) transfers the fifth buffer address area (SADR 5) to the standard interface module (CM),
- in a fourth step the standard interface module (CM) communicates a first buffer address area (SADR 1) for the data module (DT) to the communication module (ComCM),
- in a fifth step the communication module (ComCM) transfers the first buffer address area (SADR 1) of the standard interface module (CM) to the data module (DT),
- in a sixth step the data module (DT) writes data into the first buffer address area (SADR 1) of the standard interface module (CM),
- in a seventh step the standard interface module (CM) provides the data from the first buffer address area (SADR 1) with a communication protocol (Prot), and
- in an eighth step copies the data into a buffer address area (SADR 1) of the driver module (DV).

## Revendications

1. Système de traitement de données (1), notamment tachygraphe (DTCO) de véhicule automobile,
comportant des modules fonctionnels (FM) qui contrôlent certaines fonctions du système de traitement de données (1) ou d'appareils associés et
comportant des modules de données (DT) qui excitent les modules fonctionnels pour mettre les fonctions à profit, **caractérisé par le fait**
**qu'**il est prévu un module de communication (ComCM) qui se trouve en interaction avec au moins un module d'interface standard (CM), lequel module d'interface standard (CM) renferme des zones d'adresses (SADR 1 - SADR 5) de tampon de mémoire, où le module de communication (ComCN) est réalisé de manière telle qu'il indique à un premier module de données (DT) au moins une zone d'adresses (SADR 1) de tampon de mémoire en vue de l'excitation d'un premier module fonctionnel (FM).

2. Système de traitement de données (1) selon la revendication 1,
**caractérisé par le fait**
**que** le module de communication (ComCN) indique au premier module fonctionnel (FM) une zone d'adresses (SADR 1 - SADR 5) de tampon de mémoire.

3. Système de traitement de données (1) selon la revendication 1,
**caractérisé par le fait**
**que** les modules fonctionnels (FM) comprennent chacun au moins un module pilote (DV) au moyen duquel les modules fonctionnels (FM) sont excités.

4. Système de traitement de données (1) selon la revendication 1, 2 ou 3,
**caractérisé par le fait**
**que** la zone d'adresses (SADR 1 - SADR 5) de tampon de mémoire indiquée au module de données (DT) et la zone d'adresses (SADR 1 - SADR 5) de tampon de mémoire indiquée au module fonctionnel (FM) sont identiques.

5. Système de traitement de données (1) selon la revendication 1, 2, 3 ou 4,
**caractérisé par le fait**
**que** la zone d'adresses (SADR 1 - SADR 5) de tampon de mémoire indiquée au module de données (DT) et la zone d'adresses (SADR 1 - SADR 5) de tampon de mémoire indiquée au module fonctionnel (FM) sont différentes.

6. Système de traitement de données (1) selon la revendication 1, 2, 3 ou 4,
**caractérisé par le fait**
**que** le module pilote (DV) ou le module fonctionnel (FM) comportent au moins une zone d'adresses (SADR 1 - SADR 5) de tampon de mémoire dans laquelle sont inscrites les données à transmettre au module pilote (DV).

7. Système de traitement de données (1) selon l'une des revendications précédentes,
**caractérisé par le fait**
**que** le module de communication (ComCM) indique au module de données (DT) des zones d'adresses (SADR 1 - SADR 5) de tampon de mémoire du module d'interface standard (CM), à savoir une première zone d'adresses (SADR 1) de tampon de mémoire pour l'écriture et une deuxième zone d'adresses (SADR 2) de tampon de mémoire pour la lecture et que le module de communication (ComCM) indique au module fonctionnel (FM) des zones d'adresses (SADR 1 - SADR 5) de tampon de mémoire du module d'interface standard (CM), à savoir une troisième zone d'adresses (SADR 3) de tampon de mémoire pour l'écriture et une quatrième zone d'adresses (SADR 4) de tampon de mémoire pour la lecture.

8. Système de traitement de données (1) selon une revendication précédente,
**caractérisé par le fait**
**que** le module de communication (ComCM), à la suite de la requête d'un module de données (DT) pour l'accès à un module fonctionnel (FM), demande d'abord au module fonctionnel (FM) sollicité la disponibilité de l'accès sollicité.

9. Système de traitement de données (1) selon une revendication précédente,
**caractérisé par le fait**
**que** des priorités sont attribuées aux modules de données (DT) en ce qui concerne l'accès aux modules fonctionnels (FM) et que le traitement des requêtes des modules fonctionnels (FM) se fait en fonction de ces priorités sous le contrôle du module de communication (ComCM).

10. Système de traitement de données (1) selon une revendication précédente,
**caractérisé par le fait**
**que** le module d'interface standard (CM) retransmet les données de la zone d'adresses (SADR 1) de tampon de mémoire d'un module de données pour l'écriture, dotées d'un procès-verbal de communication, dans la zone d'adresses (SADR 1) de tampon de mémoire d'un module fonctionnel pour la lecture.

11. Système de traitement de données (1) selon une revendication précédente,
**caractérisé par le fait**
**que** le module de communication (ComCM) coordonne l'action conjointe entre les modules de données (DT), le module d'interface standard (CM) et les modules fonctionnels (FM), notamment le début d'une lecture de données sur une zone d'adresses (SADR 1 - SADR 5) de tampon de mémoire avec la fin d'une inscription de données dans une zone d'adresses (SADR 1) de tampon de mémoire.

12. Procédé pour faire fonctionner un système de traitement de données (1), notamment un système de traitement de données (1) selon l'une des revendications précédentes, **caractérisé par le fait**
**qu'**il est prévu un module de communication (ComCM) qui se trouve en interaction avec au moins un module d'interface standard (CM), lequel module d'interface standard (CM) renferme des zones d'adresses (SADR 1 - SADR 5) de tampon de mémoire, de manière telle qu'un premier module de données (DT) envoie, pour exciter un premier module fonctionnel (FM), une requête au module de communication (ComCN) et le module de communication (ComCN) indique au premier module de données (DT) au moins une zone d'adresses (SADR 1 - SADR 5) de tampon de mémoire.

13. Procédé selon la revendication 12,
**caractérisé par le fait**
**que** les modules fonctionnels (FM) renferment des modules pilotes (DV), au moyen desquels les modules fonctionnels (FM) sont excités.

14. Procédé selon l'une des revendications 12 - 13, **caractérisé par le fait**
**que** le module de communication (ComCM) indique au premier module fonctionnel (FM) une zone d'adresses (SADR 1 - SADR 5) de tampon de mémoire du module d'interface standard (CM) .

15. Procédé selon la revendication 14,
**caractérisé par le fait**
**que** la zone d'adresses (SADR 1) de tampon de mémoire indiquée au module de données (DT) pour l'écriture et la zone d'adresses (SADR 1) de tampon de mémoire indiquée au module fonctionnel (FM) pour la lecture sont identiques.

16. Procédé selon la revendication 14,
**caractérisé par le fait**
**que** la zone d'adresses (SADR 1) de tampon de mémoire indiquée au module de données (DT) pour l'écriture et la zone d'adresses (SADR 1) de tampon de mémoire indiquée au module fonctionnel (FM) pour la lecture sont différentes.

17. Procédé selon l'une des revendications 12 - 16,
**caractérisé par le fait**
**que** le module de communication (ComCM) indique au module de données (DT) des zones d'adresses (SADR 1 - SADR 5) de tampon de mémoire du module d'interface standard (CM), à savoir une première zone d'adresses (SADR 1) de tampon de mémoire pour l'écriture et une deuxième zone d'adresses (SADR 1) de tampon de mémoire pour la lecture et que le module de communication (ComCM) indique au module fonctionnel (FM) des zones d'adresses (SADR 1 - SADR 5) de tampon de mémoire du module d'interface standard (CM), à savoir une troisième zone d'adresses (SADR 1) de tampon de mémoire pour l'écriture et une quatrième zone d'adresses (SADR 1) de tampon de mémoire pour la lecture.

18. Procédé selon l'une des revendications 12 - 17,
**caractérisé par le fait**
**que** le module de communication (ComCM), à la suite de la requête d'un module de données demande d'abord au module fonctionnel (FM) sollicité la disponibilité de l'accès sollicité.

19. Procédé selon l'une des revendications 12 - 18,
**caractérisé par le fait**
**que** des priorités sont attribuées aux modules de données (DT) en ce qui concerne l'accès aux modules fonctionnels (FM) et que le traitement des requêtes des modules fonctionnels (FM) se fait en fonction de ces priorités sous le contrôle du module de communication (ComCM).

20. Procédé selon l'une des revendications 12 - 19,
**caractérisé par le fait**
**que** le module d'interface standard (CM) retransmet les données de la zone d'adresses (SADR 1 - SADR 5) de tampon de mémoire du module fonctionnel (FM) pour l'écriture, dotées d'un procès-verbal de communication (Prot), dans la zone d'adresses (SADR 1) de tampon de mémoire du module fonctionnel (FM) pour la lecture.

21. Procédé selon l'une des revendications 12 - 20,
**caractérisé par le fait**
**que** le module de communication (ComCM) coordonne l'action conjointe entre les modules de données (DT), le module d'interface standard (CM) et les modules fonctionnels (FM), notamment le début d'une lecture de données sur une zone d'adresses (SADR 1) de tampon de mémoire avec la fin d'une inscription de données dans une zone d'adresses (SADR 1) de tampon de mémoire.

22. Procédé selon l'une des revendications 12 - 21, **caractérisé par le fait que**,
- au cours d'une première phase, le module de données (DT) demande au module de communication (ComCM) une première zone d'adresses (SADR 1) de tampon de mémoire du module d'interface standard (CM) pour un module fonctionnel (FM),
- au cours d'une deuxième phase, le module de communication (ComCM) demande au module fonctionnel (FM) ou au module pilote (DV) une cinquième zone d'adresses (SADR 5) de tampon de mémoire du module d'interface standard (CM) pour le module fonctionnel (FM),
- au cours d'une troisième phase, le module de communication (ComCM) retransmet la cinquième zone d'adresses (SADR 5) de tampon de mémoire au module d'interface standard (CM),
- au cours d'une quatrième phase, le module d'interface standard (CM) indique au module de communication (ComCM) une première zone d'adresses (SADR 1) de tampon de mémoire pour le module de données (DT),
- au cours d'une cinquième phase, le module de communication (ComCM) retransmet la première zone d'adresses (SADR 1) de tampon de mémoire du module d'interface standard (CM) au module de données (DT),
- au cours d'une sixième phase, le module de données (DT) écrit des données dans la première zone d'adresses (SADR 1) de tampon de mémoire du module d'interface standard (CM),
- au cours d'une septième phase, le module d'interface standard (CM) dote les données provenant de la première zone d'adresses (SADR 1) de tampon de mémoire d'un procès-verbal de communication (Prot) et,
- au cours d'une huitième phase, il copie les données dans une zone d'adresses (SADR 1) de tampon de mémoire du module pilote (DV).
